# EUROPEAN PATENT APPLICATION

(11) **EP 3 560 750 A1**
(43) Date of publication of application: **30.10.2019**
(21) Application number: 19168064.4
(22) Date of filing: 09.04.2019
(51) Int. Cl.: B60L 53/16, G01K 7/22, H01R 13/66, H01R 13/514, H01C 7/00

(54) **CHARGING CONNECTOR**

(30) Priority: 25.04.2018 JP 2018083783
(71) Applicant: YAZAKI CORPORATION, Minato-ku, Tokyo 108-8333 (JP)
(72) Inventor: IWAMI, Tomokazu, Kakegawa-shi, Shizuoka 437-1421 (JP); MASUDA, Michitake, Kakegawa-shi, Shizuoka 437-1421 (JP)
(74) Representative: Grünecker Patent- und Rechtsanwälte PartG mbB

(57) **Abstract**

A charging connector includes a connector housing formed with a terminal accommodation chamber, a terminal accommodated in the terminal accommodation chamber and having a cable connected thereto, a waterproof member protecting a connection part of the terminal and the cable to form a waterproof region, and a thermistor directly contacting the terminal at an outside position of the waterproof region.

## Description

### BACKGROUND

### Technical Field

The disclosure relates to a charging connector connected with a counterpart connector for receiving charging.

### Related Art

A vehicle such as an electric vehicle is equipped with a charging connector to be connected with a charging connector provided on an electricity charging station side, for receiving charging.

As a conventional charging connector, a charging connector disclosed in JP 2011-237209 A is proposed. The charging connector includes a connector housing in which a terminal accommodation chamber is formed, a terminal accommodated in the terminal accommodation chamber and having a cable connected thereto, and a thermistor for detecting heat generation of the terminal. The thermistor is assembled to the connector housing in a state of being in contact with a cover part of a cable located near the terminal.

In the charging connector, the thermistor detects heat generation of the terminal when current is applied, and measures such as charging stop are taken based on the detected temperature of the thermistor.

Nevertheless, in the conventional charging connector, because the thermistor measures temperature via the cover part of the cable located at a distance from the terminal serving as a main heat source, there is a possibility that highly-accurate temperature measurement cannot be performed.

### SUMMARY

The present invention has been devised for solving the above-described problems, and aims to provide a charging connector in which a thermistor can perform highly-accurate temperature measurement on a terminal.

A charging connector according to an embodiment of the disclosure includes a connector housing formed with a terminal accommodation chamber, a terminal accommodated in the terminal accommodation chamber and having a cable connected thereto, a waterproof member protecting a connection part of the terminal and the cable to form a waterproof region, and a thermistor directly contacting the terminal at an outside position of the waterproof region.

The charging connector according to the above configuration can perform highly-accurate temperature measurement, since the thermistor directly contacts the terminal serving as a main heat source.

### BRIEF DESCRIPTION OF DRAWINGS

FIG. 1 illustrates a first embodiment, and is an exploded perspective view of a charging connector;
FIG. 2 illustrates the first embodiment, and is a perspective view of the charging connector;
FIG. 3 illustrates the first embodiment, and is a front view of the charging connector;
FIG. 4 illustrates the first embodiment, and is a side view of the charging connector;
FIG. 5 illustrates the first embodiment, and is an enlarged view of a V section in FIG. 4;
FIG. 6 illustrates the first embodiment, and is a VI-VI line cross-sectional view in FIG. 4;
FIG. 7 illustrates the first embodiment, and is a VII-VII line cross-sectional view in FIG. 3;
FIG. 8 illustrates a first embodiment, and is a perspective view of a thermistor;
FIG. 9 illustrates a first embodiment, and is a perspective view of a terminal;
FIG. 10 illustrates a second embodiment, and is a cross-sectional view of a charging connector that corresponds to FIG. 6;
FIG. 11 illustrates the second embodiment, and is a cross-sectional view of the charging connector that corresponds to FIG. 7;
FIG. 12 illustrates the second embodiment, and is a perspective view of a thermistor;
FIG. 13 illustrates a third embodiment, and is a cross-sectional view of a charging connector that corresponds to FIG. 6;
FIG. 14 illustrates the third embodiment, and is a cross-sectional view of the charging connector that corresponds to FIG. 7;
FIG. 15 illustrates the third embodiment, and is a perspective view of a thermistor;
FIG. 16 illustrates a fourth embodiment, and is a cross-sectional view of the charging connector that corresponds to FIG. 6;
FIG. 17 illustrates the fourth embodiment, and is a cross-sectional view of the charging connector that corresponds to FIG. 7;
FIG. 18 illustrates the fourth embodiment, and is a perspective view of a thermistor; and
FIG. 19 illustrates the fourth embodiment, and is a perspective view of a terminal.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

Description will be hereinbelow provided for embodiments of the present invention by referring to the drawings. It should be noted that the same or similar parts and components throughout the drawings will be denoted by the same or similar reference signs, and that descriptions for such parts and components will be omitted or simplified. In addition, it should be noted that the drawings are schematic and therefore different from the actual ones.

Hereinafter, embodiments will be described based on the drawings.

### (First Embodiment)

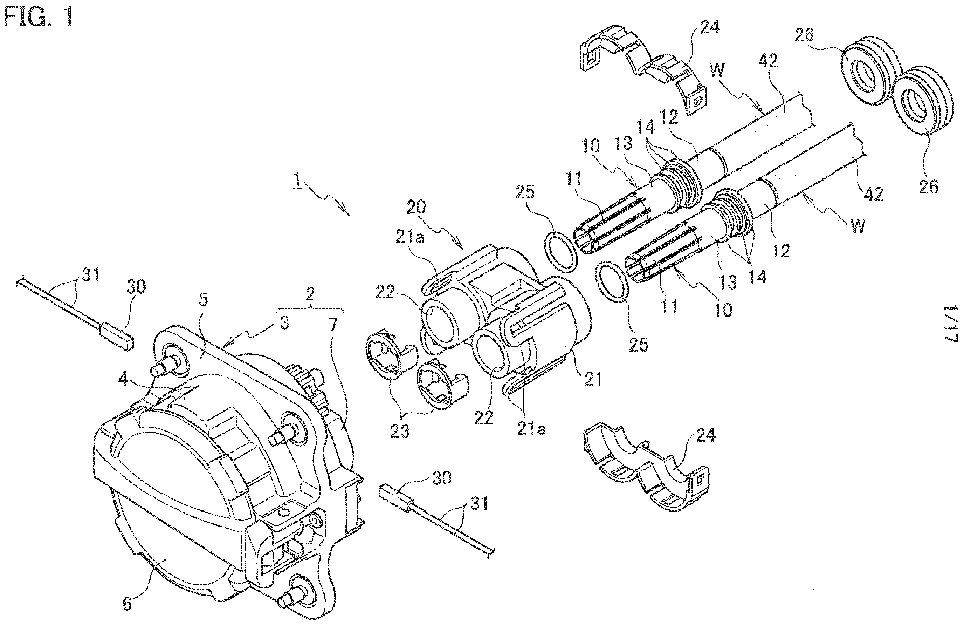

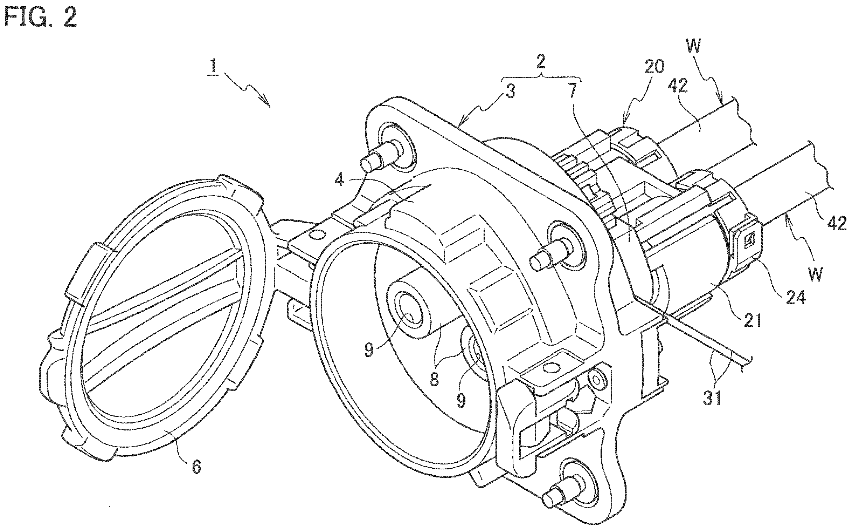

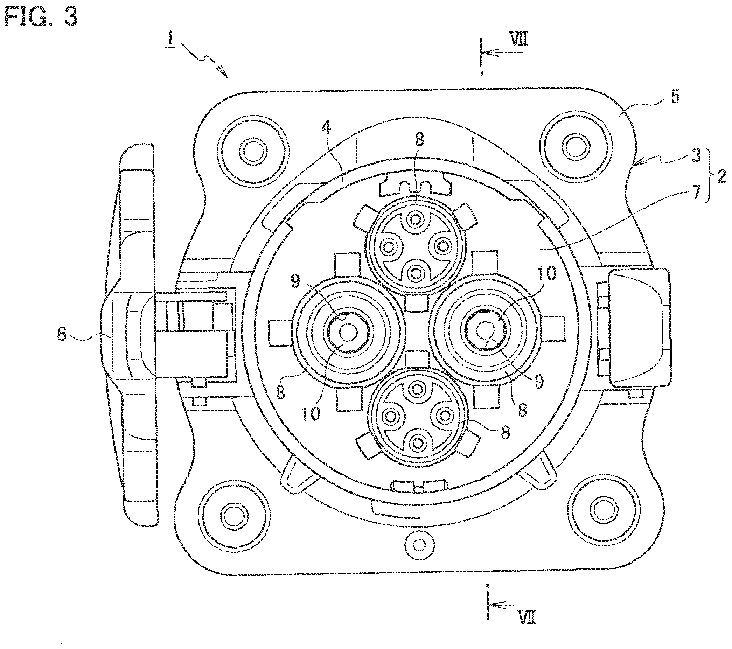

FIGS. 1 to 9 illustrate the first embodiment. A charging connector 1 includes a connector housing 2, two terminals 10 for applying large current that are fixed to the connector housing 2, a waterproof terminal retainment holder 20 for attaching the two terminals 10 to the connector housing, and serving as a waterproof member, and two thermistors 30 for detecting heat generation of the respective terminals 10.

The connector housing 2 includes an outer housing part 3 and an inner housing part 7. The outer housing part 3 includes a hood part 4 and a flange part 5 protruding toward the outside of the hood part 4. A lid member 6 for opening and closing an opening provided on the anterior surface of the hood part 4 is attached to the hood part 4. The flange part 5 is fixed to a vehicle body (not illustrated). The charging connector 1 is fixed to the vehicle body (not illustrated) using the flange part 5.

The inner housing part 7 includes four cylindrical parts 8. Each of the cylindrical parts 8 protrudes toward the inside of the hood part 4. Terminal accommodation chambers 9 are formed inside the respective cylindrical parts 8. An anterior surface and a posterior surface of each of the terminal accommodation chambers 9 are opened. The two terminals 10 for applying large current are respectively arranged in two cylindrical parts 8. A grounding terminal (not denoted with a reference sign) and a signal terminal (not denoted with a reference sign) are respectively arranged in the remaining two cylindrical parts 8.

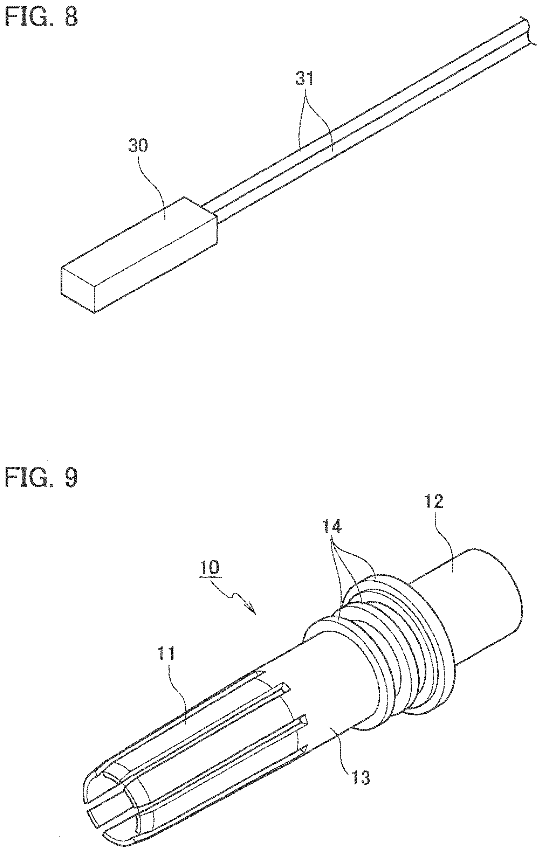

As illustrated in FIG. 9 in detail, the terminal 10 for applying large current includes a counterpart terminal contact part 11 with which a counterpart terminal (not illustrated) of a counterpart connector (not illustrated) is to be fitted, a cable crimp part 12 to which a cable W is swaged and crimped, and an intermediate link part 13 linking between the counterpart terminal contact part 11 and the cable crimp part 12.

The counterpart terminal contact part 11 has a substantial cylindrical shape. In the counterpart terminal contact part 11, a plurality of slits (not denoted with a reference sign) extending in an axial direction at equal equally-spaced positions in a circumferential direction of the cylindrical shape is formed.

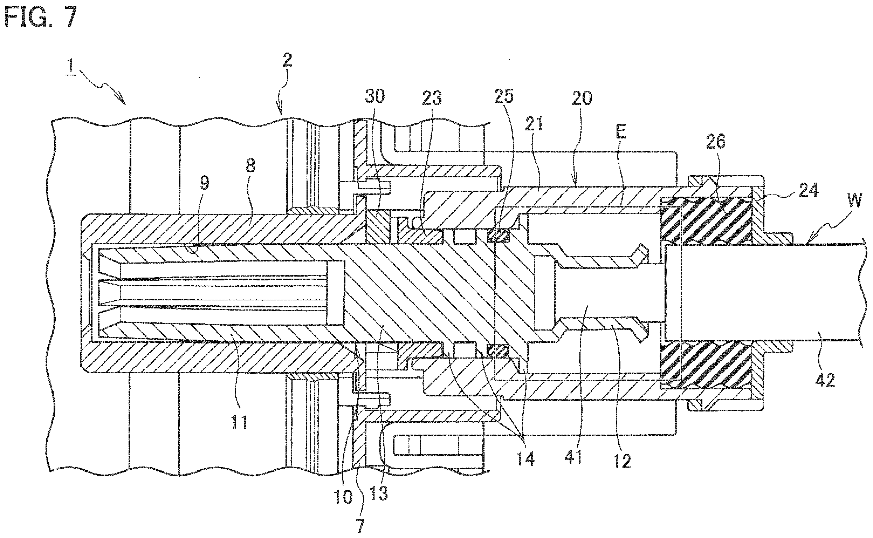

The cable crimp part 12 has a cylindrical shape, and a posterior surface of the cylindrical shape is opened. A core wire 41 of the cable W is inserted into the cable crimp part 12 through the posterior surface opening, and the inserted core wire 41 is crimped and connected by squashed deformation (swaging processing) of the cable crimp part 12 (refer to FIG. 7). The cable crimp part 12 corresponds to a connection part of the terminal 10 and the cable W.

The intermediate link part 13 is formed into a solid structure. On the outer circumference of the intermediate link part 13, a plurality of ribs 14 is projected at intervals in the axial direction.

In the terminal 10, the counterpart terminal contact part 11 is accommodated in the terminal accommodation chamber 9, and the intermediate link part 13 and the cable crimp part 12 are protruded toward the back of the terminal accommodation chamber 9.

The waterproof terminal retainment holder 20 includes a holder main body 21 including two terminal insertion holes 22, two flange rings 23 arranged at the front end of the holder main body 21, a rear holder 24 that is arranged at the rear end of the holder main body 21 and include two components, two O-rings 25, and two seal rubbers 26. The terminals 10 are inserted into the respective terminal insertion holes 22 of the holder main body 21. The respective flange rings 23 are attached to the outer circumferences of the terminals 10. The respective O-rings 25 are arranged so as to be fitted between ribs 14 of the intermediate link parts 13 of the terminals 10. The respective seal rubbers 26 are attached to cover parts 42 of the cables W pulled out from the cable crimp parts 12 of the terminals 10. As illustrated in FIG. 7, the rear holder 24 including two components are attached to the rear end of the holder main body 21 by being engaged with each other, and retains the seal rubbers 26 inside the holder main body 21. The seal rubbers 26 retained inside the holder main body 21 are retained in a state of closely attached to the inner circumference surface of the holder main body 21. The waterproof terminal retainment holder 20 retains the two terminals 10 in a positioned state, and protects the connection parts of the terminals 10 and the cables W.

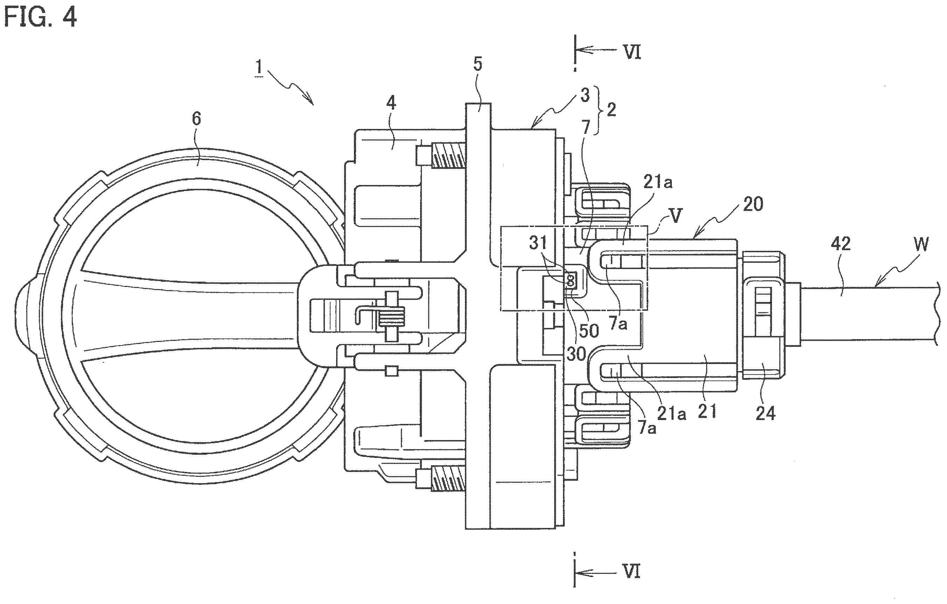

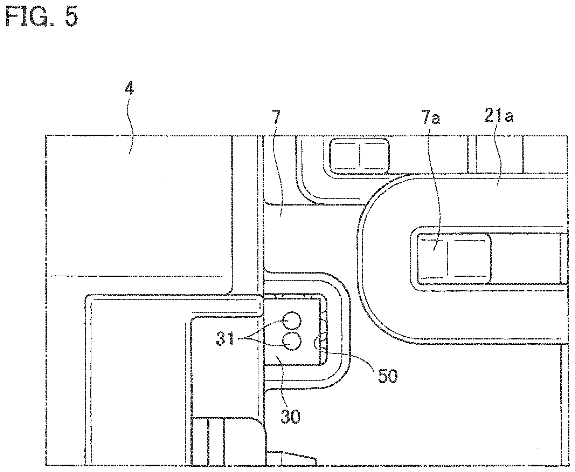

As illustrated in FIGS. 4 and 5, the holder main body 21 is provided with a plurality of latch frames 21a protruding forward. The respective latch frames 21a are latched with click parts 7a of the inner housing part 7. Each of the terminals 10 is assembled to the inner housing part 7 by the waterproof terminal retainment holder 20.

As illustrated in FIG. 7, the connection part of the terminal 10 and the cable W is made waterproof by a waterproof region E surrounded by the O-ring 25, the holder main body 21, and the seal rubber 26. This prevents corrosion caused by invasion of water or the like.

In other words, the waterproof terminal retainment holder 20 is a waterproof member that makes waterproof the connection part of the terminal 10 and the cable W, and is a terminal retainment holder that retains and assembles the terminal 10 to the connector housing 2 in a state in which the connection part of the terminal 10 and the cable W is protected.

As illustrated in FIG. 8 in detail, the thermistor 30 has an elongated cuboid shape. Detection lines 31 are pulled out from the thermistor 30.

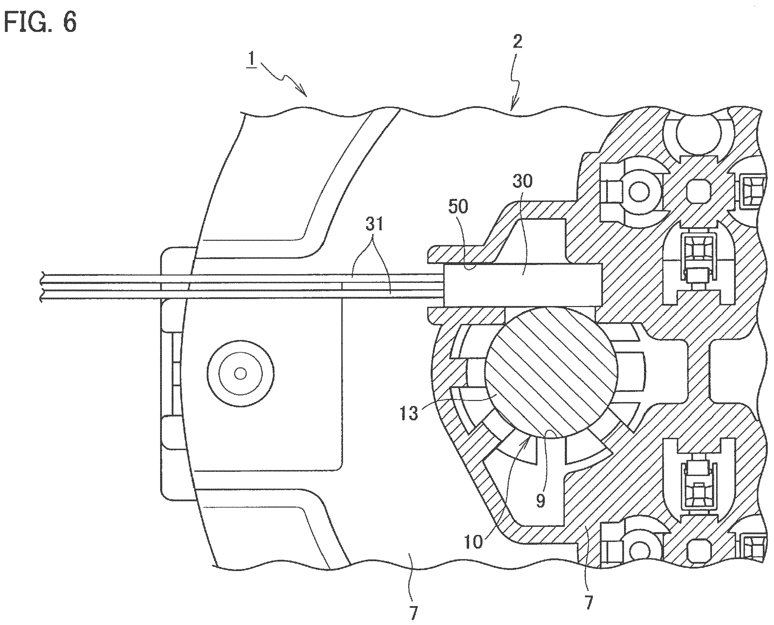

The thermistor 30 is attached to the charging connector 1 in the following manner. As illustrated in FIG. 6, on the back side of the inner housing part 7, a thermistor accommodation chamber 50 is provided. The thermistor 30 can be inserted into the thermistor accommodation chamber 50 from the outside of the inner housing part 7. The thermistor 30 is accommodated in the thermistor accommodation chamber 50 in a positioned state. The outer circumferential surface of the accommodated thermistor 30 is brought into direct contact with the outer circumferential surface of the intermediate link part 13 of the terminal 10. In other words, the thermistor 30 is brought into direct contact with the terminal 10 at an outside position of the waterproof region E. In the inner housing part 7, a route through which the detection lines 31 of the thermistor 30 can be pulled out to the outside is formed.

Next, an example of assembly of the charging connector 1 will be briefly described. The connector housing 2 is created by assembling the inner housing part 7 and the outer housing part 3. The thermistor 30 is accommodated in the thermistor accommodation chamber 50 of the inner housing part 7, and the detection lines 31 of the thermistor 30 are pulled out to the outside of the inner housing part 7.

The O-rings 25 are attached to predetermined positions of the terminals 10 to which the cables W are connected, and the seal rubbers 26 are attached to the outer circumferences of the cover parts 42 of the respective cables W. Next, the waterproof terminal retainment holder 20 is created by inserting the respective terminals 10 into the terminal insertion holes 22 of the holder main body 21, and attaching the flange rings 23 and the rear holder 24.

Next, the two terminals 10 to which the waterproof terminal retainment holder 20 is attached are inserted into the respective terminal accommodation chambers 9 of the inner housing part 7 from the back. Then, when the respective latch frames 21a of the holder main body 21 are latched with the click parts 7a of the inner housing part 7, the assembly of the charging connector 1 is completed.

As described above, the charging connector 1 includes the connector housing 2 in which the terminal accommodation chamber 9 is formed, a terminal 10 accommodated in the terminal accommodation chamber 9 and having the cable W connected thereto, the waterproof terminal retainment holder 20 protecting the connection part of the terminal 10 and the cable W, and sealing the connection part as the waterproof region E, and the thermistor 30 directly contacting the terminal 10 at an outside position of the waterproof region E.

Thus, because the thermistor 30 directly contacts the terminal 10 serving as a main heat source, highly-accurate temperature measurement can be performed. More specifically, in a case where there is a rapid temperature rise in the terminal 10, because the thermistor 30 directly detects the part where temperature rapidly rises, detected temperature of the thermistor 30 does not depart from the temperature rise of the terminal 10, and measures such as power stop can be promptly taken. Because the thermistor 30 directly contacts the terminal 10, the thermistor 30 is less likely to be affected by an external factor (atmosphere temperature, etc.). Thus, a malfunction caused in a case where charging is performed in a high-temperature environment close to charging stop temperature can be prevented. Application of large current that brings temperature close to preset temperature, and current application performed while performing temperature control by feedback control are facilitated.

In addition, because the thermistor 30 directly contacts the terminal 10 at an outside position of the waterproof region E, the thermistor 30 can be easily attached. In other words, when the thermistor 30 is configured to contact the terminal 10 inside the waterproof region E, a waterproof unit (e.g. use of a seal member) needs to be provided for the detection lines 31 to be pulled out from the inside of the waterproof region E to the outside of the waterproof region E, but in the present embodiment, the waterproof unit is not required. Thus, the thermistor 30 can be easily attached.

The connector housing 2 is provided with the thermistor accommodation chamber 50 that accommodates the thermistor 30 in a state of directly contacting the terminal 10. Thus, the thermistor 30 can be surely and easily mounted to the connector housing 2. Either one or both of the thermistor 30 and the terminal 10 need not a unit for bringing the thermistor 30 into direct contact with the terminal 10.

### (Second Embodiment)

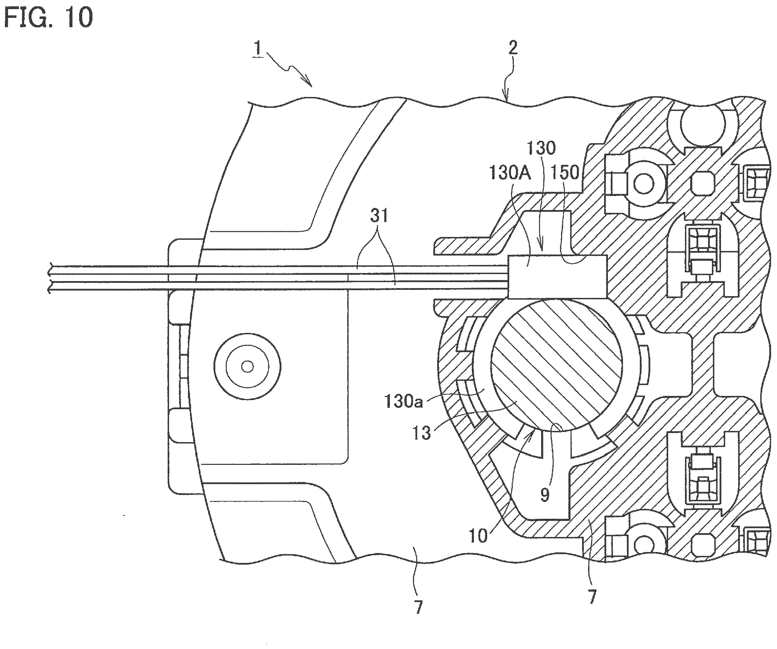

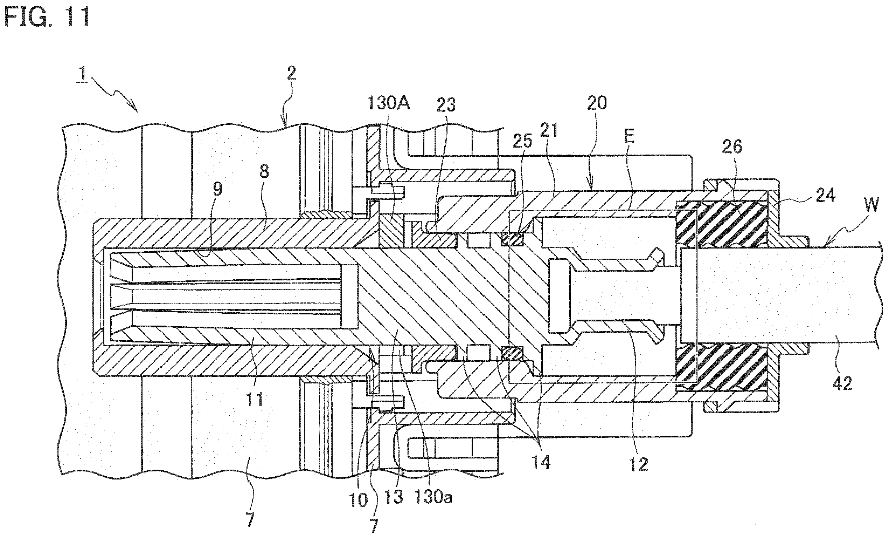

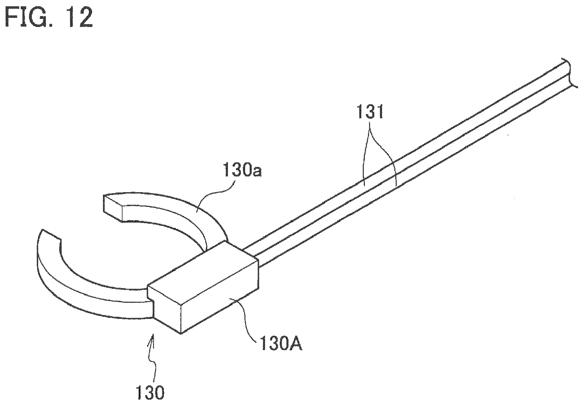

FIGS. 10 to 12 illustrate the second embodiment. As compared with the first embodiment, a charging connector 1 of the second embodiment mainly differs in a configuration of a thermistor 130 and a configuration of a thermistor accommodation chamber 150.

In other words, the thermistor 130 includes a thermistor main body 130A having an elongated cuboid shape and a temperature sensing ring part 130a protruding outward from the thermistor main body 130A. The temperature sensing ring part 130a has a ring shape having an internal diameter of substantially the same dimension as an outer diameter of the intermediate link part 13 of the terminal 10. A part of the circumferential direction of the temperature sensing ring part 130a is cut out. The temperature sensing ring part 130a is formed of thermally-conductive material.

The thermistor accommodation chamber 150 of the inner housing part 7 is formed in such a manner that both of the thermistor main body 130A and the temperature sensing ring part 130a of the thermistor 130 can be accommodated.

The terminal 10 is inserted into the temperature sensing ring part 130a of the thermistor 130. In the thermistor 130, the surface of the thermistor main body 130A contacts the outer circumferential surface of the intermediate link part 13 of the terminal 10, and the entire circumference of the inner circumferential surface of the temperature sensing ring part 130a contacts the outer circumferential surface of the intermediate link part 13 of the terminal 10. In the inner housing part 7, a route through which the detection lines 131 of the thermistor 130 can be pulled out to the outside is formed.

Because the other configurations are similar to those of the above-described first embodiment, redundant description will be omitted. The same structural elements in the drawings are denoted with the same reference sign for clarification.

Also in the second embodiment, because the thermistor 130 directly contacts the terminal 10 serving as a main heat source, highly-accurate temperature measurement can be performed. Because the thermistor 130 of the second embodiment contacts the terminal 10 in the entire circumference of the inner circumferential surface of the temperature sensing ring part 130a, as compared with the first embodiment, a contact area of the terminal 10 is larger. Thus, temperature measurement can be performed more accurately.

Because the temperature sensing ring part 130a has a cut out in the circumferential direction, the temperature sensing ring part 130a can be attached in a closely-attached state even if an outer diameter dimension of the terminal 10 is slightly larger than an inner diameter dimension of the temperature sensing ring part 130a.

### (Third Embodiment)

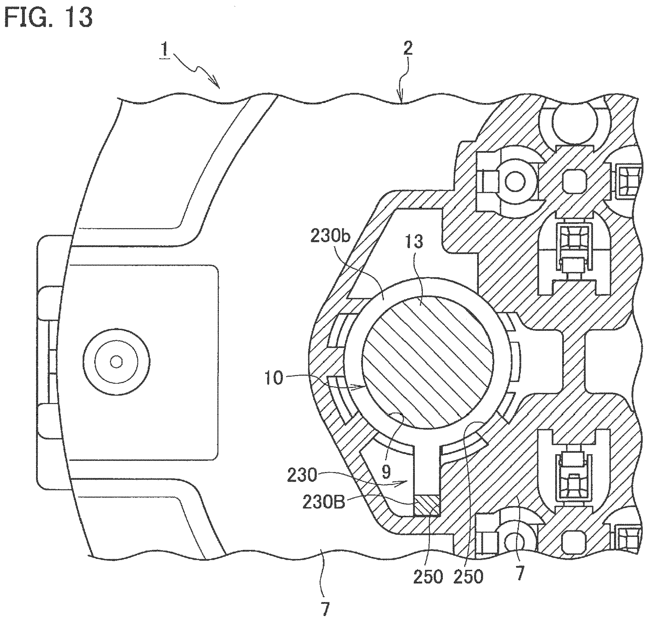

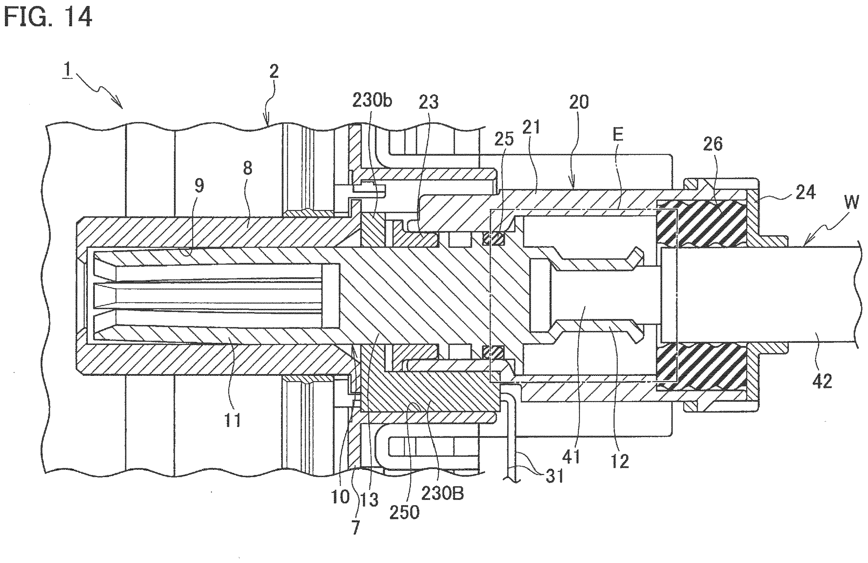

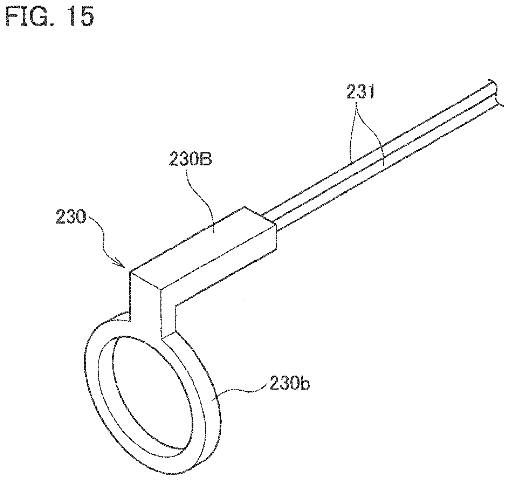

FIGS. 13 to 15 illustrate the third embodiment. As compared with the above-described second embodiment, a charging connector 1 of the third embodiment mainly differs in a configuration of a thermistor 230 and a configuration of a thermistor accommodation chamber 250.

In other words, the thermistor 230 includes a thermistor main body 230B having an elongated cuboid shape and a temperature sensing ring part 230b protruding outward from the thermistor main body 230B. The temperature sensing ring part 230b has a ring shape having an internal diameter of substantially the same dimension as an outer diameter of the intermediate link part 13 of the terminal 10. Unlike that in the second embodiment, the temperature sensing ring part 230b is formed into a complete ring shape without being partially cut out. The temperature sensing ring part 230b is formed of thermally-conductive material.

The thermistor accommodation chamber 250 of the inner housing part 7 is formed in such a manner that both of the thermistor main body 230B and the temperature sensing ring part 230b of the thermistor 230 can be accommodated. In the inner housing part 7, a route through which the detection lines 231 of the thermistor 230 can be pulled out to the outside is formed.

The terminal 10 is inserted into the temperature sensing ring part 230b of the thermistor 230. In the thermistor 230, the surface of the thermistor main body 230B does not contact the outer circumferential surface of the intermediate link part 13 of the terminal 10, and only the inner circumferential surface of the temperature sensing ring part 230b circumferentially contacts the outer circumferential surface of the intermediate link part 13 of the terminal 10. The detection lines 231 of the thermistor 230 are pulled out to the outside of the inner housing part 7.

Because the other configurations are similar to those of the above-described first embodiment, redundant description will be omitted. The same structural elements in the drawings are denoted with the same reference sign for clarification.

Also in the third embodiment, because the thermistor 230 directly contacts the terminal 10 serving as a main heat source, highly-accurate temperature measurement can be performed. Because the thermistor 230 of the third embodiment circumferentially contacts the terminal 10 in the inner circumferential surface of the temperature sensing ring part 230b, as compared with the first embodiment, a contact area of the terminal 10 is larger. Thus, temperature measurement can be performed more accurately. In addition, in the thermistor 230 of the third embodiment, because the temperature sensing ring part 230b has a completed ring shape not having a cut out, as compared with the second embodiment, a contact area of the terminal 10 is larger. Thus, temperature measurement can be performed further accurately than the second embodiment.

### (Fourth Embodiment)

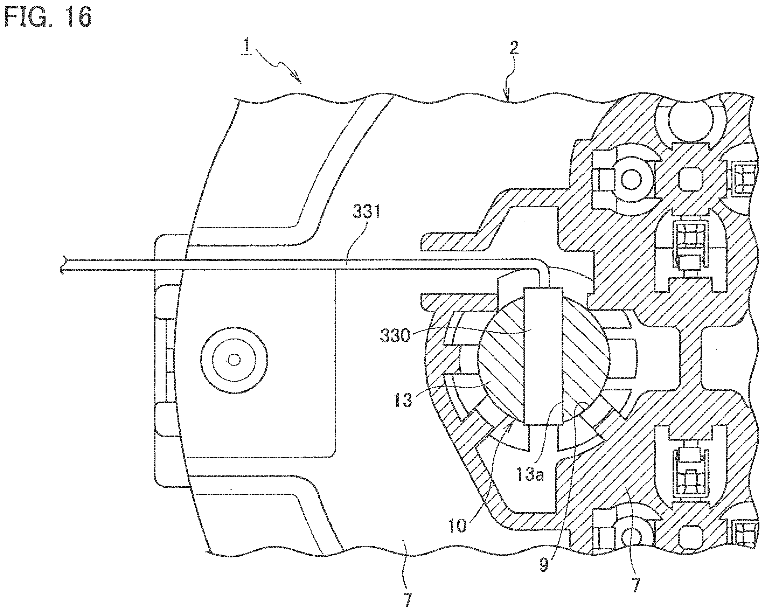

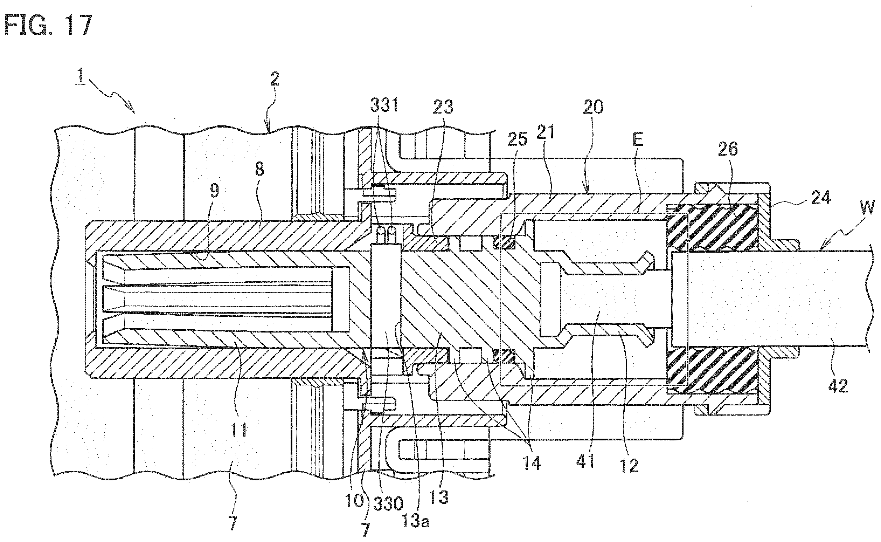

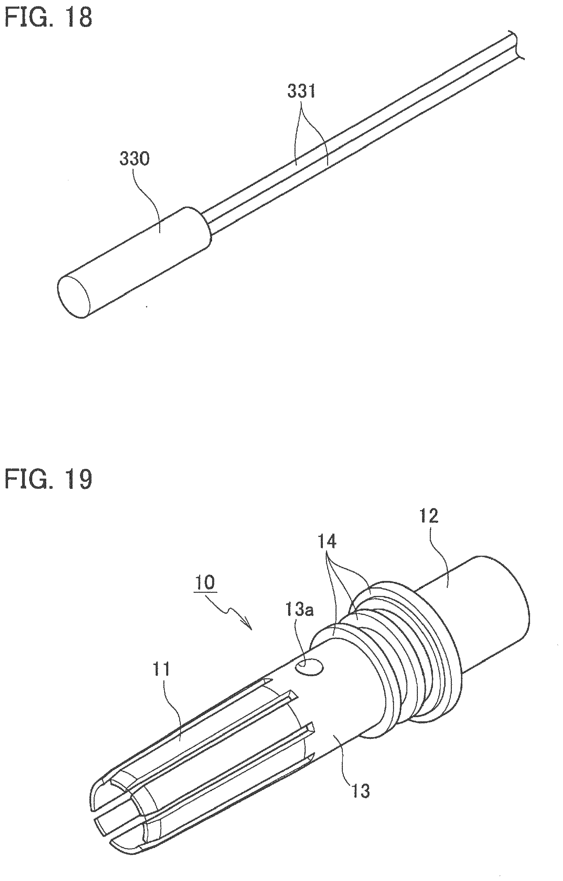

FIGS. 16 to 19 illustrate the fourth embodiment. As compared with the above-described first embodiment, a charging connector 1 of the fourth embodiment differs in a configuration of a thermistor 330 and a configuration of a terminal 10.

In other words, the thermistor 330 is formed into an elongated columnar shape. In the terminal 10, a thermistor accommodation hole 13a is formed in the intermediate link part 13 having a solid structure. The thermistor 330 is accommodated in the thermistor accommodation hole 13a of the terminals 10. Thus, the inner housing part 7 is not provided with a thermistor accommodation chamber. In the fourth embodiment, the thermistor accommodation hole 13a is formed vertically with respect to the axial direction of the terminal 10.

Almost the entire region of the circumferential surface of the outer circumference of the thermistor 330 contacts the inner circumferential surface of the thermistor accommodation hole 13a of the terminal 10. The detection lines 331 of the thermistor 330 are pulled out to the outside of the inner housing part 7 though a route (not illustrated).

Because the other configurations are similar to those of the above-described first embodiment, redundant description will be omitted. The same structural elements in the drawings are denoted with the same reference sign for clarification.

Also in the fourth embodiment, because the thermistor 330 directly contacts the terminal 10 serving as a main heat source, highly-accurate temperature measurement can be performed. As compared with the first embodiment, the thermistor 330 of the fourth embodiment has a larger contact area of the terminal 10. Thus, temperature measurement can be performed more accurately. In addition, in the thermistor 330 of the fourth embodiment, because the main body of the thermistor 330 directly contacts the terminal 10 with a larger contact area not via the temperature sensing ring part 130a, 230b, or the like, as compared with the second and third embodiments, temperature measurement can be performed more accurately.

In the fourth embodiment, because the thermistor 330 is accommodated in the thermistor accommodation hole 13a of the terminal 10, the inner housing part 7 needs not be provided with a thermistor accommodation chamber.

Embodiments of the present invention have been described above. However, the invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

Moreover, the effects described in the embodiments of the present invention are only a list of optimum effects achieved by the present invention. Hence, the effects of the present invention are not limited to those described in the embodiment of the present invention.

## Claims

1. A charging connector comprising:
a connector housing formed with a terminal accommodation chamber;
a terminal accommodated in the terminal accommodation chamber and having a cable connected thereto;
a waterproof member protecting a connection part of the terminal and the cable to form a waterproof region; and
a thermistor directly contacting the terminal at an outside position of the waterproof region.

2. The charging connector according to claim 1,
wherein the connector housing is provided with a thermistor accommodation chamber configured to accommodate the thermistor directly in contact with the terminal.

3. The charging connector according to claim 1 or 2,
wherein an outer circumferential surface of the thermistor contacts an outer circumferential surface of the terminal.

4. The charging connector according to claim 1 or 2,
wherein the thermistor includes a temperature sensing ring part protruding outward, and
the terminal is inserted into the temperature sensing ring part, and an inner circumferential surface of the temperature sensing ring part contacts an outer circumferential surface of the terminal.

5. The charging connector according to claim 1 or 2,
wherein the thermistor is inserted into a thermistor accommodation hole formed in a portion of a solid structure of the terminal, and an outer circumferential surface of the thermistor contacts an inner circumferential surface of the thermistor accommodation hole.
